(19) Europäisches Patentamt
European Patent Office
Office européen des brevets

(11) Publication number: **0 068 732**
**B1**

(12) **EUROPEAN PATENT SPECIFICATION**

(45) Date of publication of patent specification: **28.08.85**

(51) Int. Cl.[4]: **C 07 F 9/40**, C 07 F 9/65, A 01 N 57/18

(21) Application number: **82303147.1**

(22) Date of filing: **17.06.82**

(54) **Herbicidally active monoesters and diesters of n-alkyl substituted amino methyl phosphonic acid and process for preparing same.**

(30) Priority: **19.06.81 US 275463**
**19.06.81 US 275485**
**19.06.81 US 275486**
**19.06.81 US 275487**

(43) Date of publication of application:
**05.01.83 Bulletin 83/01**

(45) Publication of the grant of the patent:
**28.08.85 Bulletin 85/35**

(84) Designated Contracting States:
**AT BE CH DE FR IT LI LU NL SE**

(56) References cited:
**DE-A-2 848 869**
**US-A-3 799 758**
**US-A-4 008 296**
**US-A-4 025 331**
**US-A-4 221 583**

(73) Proprietor: **MONSANTO COMPANY**
**Patent Department 800 North Lindbergh Boulevard**
**St. Louis, Missouri 63166 (US)**

(72) Inventor: **Purdum, William Ronald**
**12420 Leigh Lane**
**Maryland Heights Missouri 63043 (US)**

(74) Representative: **Lunt, John Cooper et al**
**Monsanto Europe S.A. Patent Department**
**Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 068 732 B1

**Description**

This invention relates to a process for preparing mono- and diesters of N-substituted amino methyl phosphonic acids and to certain novel esters obtainable by the process.

US—A—4,025,331 issued to Jean-Pierre Leber on May 24, 1977 discloses N-phosphonomethylglycine derivatives of the formula

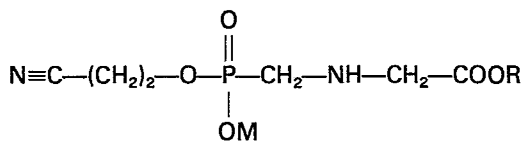

wherein R of Leber is hydrogen, unsubstituted or substituted hydrocarbon or a cation and M is hydrogen or a cation, as well as two reaction step process for preparing the same. The compounds disclosed in US—A—4,025,331 supra are said to possess herbicidal and plant growth regulating properties.

US—A—4,008,296 issued to John Edward Duncan Barton on February 15, 1977 discloses a catalyzed process for preparing N-phosphonomethylglycine having the formula

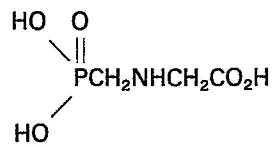

which comprises (a) reacting 1,3,5-tricyanomethylhexahydro-1,3,4-triazine with an ester of phosphorous acid having the formula

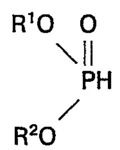

wherein $R^1$ and $R^2$ of Barton are hydrocarbyl or substituted hydrocarbyl radicals, in the presence of a catalyst comprising a hydrogen halide, a Lewis acid, a carboxylic acid halide, or a carboxylic acid anhydride to form an ester of N-phosphonomethylglycinonitrile, and (b) hydrolysing the ester of the N-phosphonomethylglycinonitrile, and recovering N-phosphonomethylglycine.

The process of the present invention is a process for the preparation of phosphonate compounds useful as herbicides of the formula

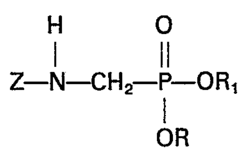

(I)

wherein Z is

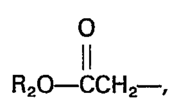

wherein $R_2$ is $C_{1-8}$alkyl, ($C_{1-8}$alkoxy) $C_{1-8}$alkyl, halo $C_{1-8}$alkyl, phenyl $C_{1-8}$alkyl, or Z is $C_{2-8}$alkynyl, $C_{1-8}$alkyl, or $N{\equiv}CCH_2$—;

$R_1$ is selected from

(a)

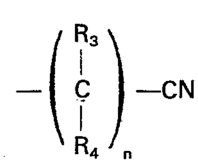

wherein n is an integer from 1 to 4, $R_3$ is selected from hydrogen, $C_{1-8}$alkyl, ($C_{1-8}$alkoxy) $C_{1-8}$alkyl, halo $C_{1-8}$alkyl, phenyl $C_{1-8}$alkyl, and $R_4$ is hydrogen or $C_{1-8}$alkyl, excepting that $R_3$ and $R_4$ cannot both be hydrogen when n is 1;

(b) 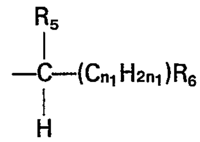

where $R_5$ is hydrogen, $C_{1-8}$alkyl, ($C_{1-8}$alkoxy)carbonyl, and $R_6$ is halogen, ($C_{1-8}$alkoxy)carbonyl or

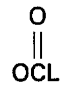

wherein L is $C_{1-8}$alkyl, and $n_1$ is 0 or an integer from 1 to 3;

(c) —($C_{n_2}H_{2n_2}$)S—X, wherein X is $C_{1-8}$alkyl or ($C_{1-8}$alkoxy) carbonyl and $n_2$ is an integer from 1 to 4; or

(d) —($C_{n_3}H_{2n_3}$)—Y, wherein $n_3$ is 0 or an integer from 1 to 4 and Y is selected from trihalomethyl, ($C_{1-8}$alkoxy)carbonyl, furanyl, pyrolidinyl, pyranyl, thiopyranyl,

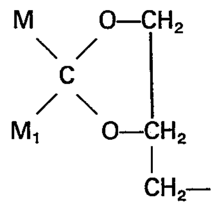

wherein $M_1$ and M are independently $C_{1-8}$alky; and R is $R_1$ or hydrogen; said process comprising reacting a trisubstituted phosphite of the formula $P(OR_1)_3$ wherein $R_1$ is as defined above, with water and a compound of the formula

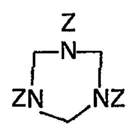 (II)

wherein Z is as aforedefined, to prepare a crude phosphonate composition containing said phosphonate compound, and thereafter recovering said phosphonate compound from said crude phosphonate composition.

The novel esters of the invention are compounds of the formula

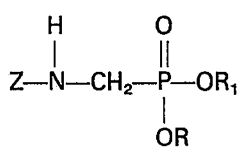

and agriculturally acceptable salts thereof, wherein Z is $C_{2-8}$alkynyl, $C_{1-8}$alkyl, or N≡$CCH_2$—; $R_1$ is selected from

(a) 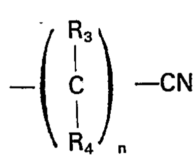

wherein n is an integer from 1 to 4, $R_3$ is selected from hydrogen, $C_{1-8}$alkyl, ($C_{1-8}$alkoxy) $C_{1-8}$alkyl, halo $C_{1-8}$alkyl, phenyl $C_{1-8}$alkyl, and $R_4$ is hydrogen or $C_{1-8}$ alkyl, but excluding the compounds wherein n is 2 and $R_3$ and $R_4$ are both hydrogen;

(b) 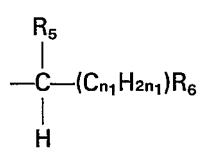

where $R_5$ is hydrogen, $C_{1-8}$alkyl, ($C_{1-8}$alkoxy)carbonyl, and $R_6$ is halogen, ($C_{1-8}$alkoxy)carbonyl or

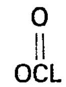

wherein L is $C_{1-8}$alkyl, and $n_1$ is 0 or an integer from 1 to 3;

(c) —$(C_{n_2}H_{2n_2})$S—X, wherein X is $C_{1-8}$alkyl or ($C_{1-8}$alkoxy) carbonyl and $n_2$ is an integer from 1 to 4; or

(d) —$(C_{n_3}H_{2n_3})$—Y, wherein $n_3$ is 0 or an integer from 1 to 4 and Y is selected from trihalomethyl, ($C_{1-8}$alkoxy)carbonyl, furanyl, pyrolidinyl, pyranyl, thiopyranyl,

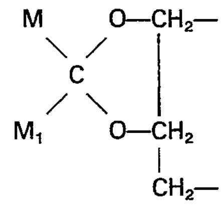

wherein $M_1$ and M are independently $C_{1-8}$alkyl; and R is $R_1$ or hydrogen.

With reference to the above formula (I), the term "$C_{1-8}$alkyl" includes alkyl radicals which have up to 8 carbon atoms in a straight or branched chain, for example, methyl, ethyl, propyl, isopropyl, butyl, isobutyl, sec-butyl, t-butyl, pentyl, hexyl, heptyl and octyl.

Typical examples of ($C_{1-8}$alkoxy) $C_{1-8}$alkyl radicals are methoxymethyl, ethoxyethyl and propoxymethyl.

The term "halo" includes chlorine, bromine, fluorine and iodine.

Illustrative phenyl $C_{1-8}$alkyl radicals are phenylmethyl, phenylethyl, phenylpropyl, phenylbutyl and phenyl t-butyl.

The compound of formula (II) is a 1,3,5-tri-substituted hexahydro-1,3,5-triazine (trimer of Schiff's base of formaldehyde and a corresponding amine), and in the process, this is reacted with the trisubstituted phosphite $P(OR_1)_3$ and with water, usually at a temperature in the range from about 10 to 110°C, and preferably from about 20 to about 100°C.

Preferably, for each mole of tri-substituted phosphite employed, one should employ from about 0.5 to about 1.5 mole water, and about 0.25 to about 0.5 mole 1,3,5-tri-substituted hexahydro-1,3,5-triazine.

While no catalyst is required for the aforedescribed reaction to proceed, a catalyst may be employed if desired.

The reaction time is in the range from about 1 to about 72 and is preferably from about 2 to about 50 hours.

While the process of this invention can be conducted at atmospheric, sub-atmospheric or super-atmospheric pressure, for convenience and economy it is generally preferred to conduct this process at atmospheric pressure.

Although a suitable solvent may be employed in the afore-described process, it is preferred that the reaction be carried out in the absence of a solvent.

The reactants may be admixed in any order to form the reaction composition and suitable agitation is provided, preferably by stirring.

A purified monoester or diester product may be recovered from the crude monoester or diester composition by employing a chromatographic and/or distillation means having sufficient capability and capacity to effect the aforedescribed recovery.

If desired agriculturably acceptable salts may be prepared from the aforedescribed monoesters. While the salt employed may be any agriculturally acceptable salt, preferred salts include those of the alkali metals such as the sodium, potassium, and lithium salts, the alkaline earth metal salts such as magnesium and calcium salts, as well as those salts disclosed in U.S. Patent 3,799,758, issued March 26, 1974, to John E. Franz, the disclosure of which is incorporated herein by reference. Preferred salts include the ammonium and organic ammonium salts. The organic ammonium salts are those salts prepared from low molecular weight organic amines, i.e., having a molecular weight below about 300. Such organic amines include the alkyl amines such as isopropylamine alkylamines and alkanol amines containing not more than 2 amine groups.

Strong acid salts may also be prepared as an agriculturally acceptable salt such as those having a pk of 2.5 or less such as hydrochloric acid, sulfuric, phosphoric acid, trifluoroacetic acid and trichloroacetic acid. The alkali metal salts may be prepared by reacting the mono esters with a suitable alkali metal hydroxide or alkali metal carbonate. The alkaline earth metal salts maybe prepared in similar fashion by use of the corresponding hydroxide and carbonate for example. The alkaline earth metal salt will be two parts acid to one part alkaline earth metal.

The following examples are presented to define the invention more completely without any intention of being limited thereby. All parts and percentages are by weight, unless otherwise specified.

Example 1

A reaction composition comprising 15.8 g (0.065 mole) tri-(1-cyanoethyl)phosphite, 1.2 g (0.065 mole) water, and 7.5 g (0.022 mole) 1,3,5-tri(ethoxycarbonymethyl)hexahydro-1,3,5-triazine was prepared and stirred while maintaining the reaction temperature at about 10 to about 20°C with external cooling by an ice-water bath for a time of three hours. After completion of the reaction, α-hydroxypropionitrile a reaction alcohol coproduct was removed by employing bulb to bulb distillation at a pressure of 6.67 Pa (0.05 mm Hg) and a temperature of 25°C. The desired glycine product was recovered by employing column chromatography of the distillation residue on cellulose (microcrystalline) with ethyl acetate:cyclohexane (1:3). The product, glycine, N-[[bis(1-cyanoethoxy)phosphinyl]methyl],ethyl ester, was obtained as a viscous reddish-colored oil at a yield of 2.0 grams (10.2%) and had the following analysis:

| | |
|---|---|
| Calculated: | C, 43.57; H, 5.98; N, 13.86; P, 10.21; |
| Found: | C, 44.09; H, 5.90; N, 14.67; P, 10.35. |

Example 2

A reaction composition comprising 15 g (0.053 mole) tri-(1-cyano-1-methylethyl)phosphite, 0.95 g (0.053 mole) water, and 6.11 g (0.0177 mole) 1,3,5-tri-(ethoxycarbonylmethyl)hexahydro-1,3,5-triazine was agitated at about 25°C for 24 hours resulting in the formation of a pale-yellow-colored solution. The pale-yellow-colored solution was heated at about 50°C for three hours with agitation. An alcohol coproduct α-hydroxyisobutyronitrile was left in solution. The reaction mixture was purified by employing chromatography on cellulose (microcrystalline) with the eluent ethyl acetate. The product, glycine, N-[bis(1-cyano-1-methyl-ethoxy)phosphinylmethyl], ethyl ester, was obtained as a viscous reddish-brown oil having a yield of 16.6 g (94%) and had the following analysis:

| | |
|---|---|
| Calculated: | C, 47.13; H, 6.69; N, 12.68; P, 9.35; |
| Found: | C, 47.74; H, 6.72; N, 13.41; P, 9.10. |

Example 3

A mixture of 15.0 g (0.0622 mole) of tri-(1-cyanoethyl) phosphite, 1.12 g (0.0622 mole) of water and 4.17 g (0.0207 mole) of 1,3,5-tri-(propynyl)hexahydro-1,3,5-triazine was agitated at about 25°C for six hours with a slight exotherm. An alcohol coproduct, 2-hydroxypropionitrile, was removed by bulb to bulb distillation at 25°C and 13.33 Pa (0.1 mm Hg). The distillation residue was chromatographed on microcrystalline cellulose with ethyl acetate as eluent. The compound, phosphonic acid, [(2-propynylamino)-methyl]-,bis(1-cyanoethyl)ester was obtained as a viscous reddish-brown oil in a yield of 87% (13.8 g) and had the following analysis:

| | |
|---|---|
| Calculated: | C, 47.06; H, 5.53; N, 16.47; P, 12.14; |
| Found: | C, 47.16; H, 5.75; N, 16.09; P, 9.62; |
| Rechromatographed | |
| Found: | C,47.19; H, 5.70; N, 16.10; P, 9.62. |

Example 4

A mixture of 15.0 g (0.0622 mole) of tri-(1-cyanomethyl) phosphite, 1.12 g (0.0622 mole) of water and 5.29 g (0.0207 mole) of 1,3,5-tri-(tertiary-butyl)-hexahydro-1,3,5-triazine was agitated at about 25°C for six hours with a slight exotherm. An alcohol coproduct, 2-hydroxy-propionitrile, was removed by bulb to bulb distillation at 25°C and 13.33 Pa (0.1 mm Hg). The distillation residue was chromatographed on microcrystalline cellulose with ethyl acetate as eluent. The compound, (phosphonic acid, [[(1,1-dimethylethyl)amino]methyl]-bis(1-cyanoethyl)ester) was obtained as a viscous orange oil in a yield of 82% (14.0 g) and had the following analysis:

| | |
|---|---|
| Calculated: | C, 48.35; H, 7.38; N, 15.38; P, 11.34; |
| Found: | C, 47.68; H, 7.09; N, 15.10; P, 9.32; |
| Rechromatographed | |
| Found: | C, 45.95; H, 7.15; N, 14.57; P, 10.68. |

Example 5

A reaction composition comprising 13.0 g (0.05 mole) tri-(1-cyanoethyl)phosphite, 0.97 g (0.05 mole) water, and 6.2 g (0.02 mole) 1,3,5-tri(ethoxycarbonylmethyl)hexahydro-1,3,5-triazine was agitated at a temperature of about 25°C for 5 hours. An alcohol co-product α-hydroxypropionitrile was removed by employing bulb to bulb distillation at 30°C and 13.33 Pa (0.1 mm Hg). The distillation residue was chromatographed on microcrystalline cellulose employing ethyl acetate as an eluent. A precipitate of the desired product, glycine, N-[[(1-cyanoethoxy)hydroxy-phosphinyl]methyl]ethyl ester, was formed in the

effluent upon standing at about 25°C for 12 hours. The yield was 0.5 g (4%). The analysis of the product was:

| | |
|---|---|
| Calculated: | C, 38.41; H, 6.04; N, 11.20; P, 12.38; |
| Found: | C, 38.35; H, 6.21; N. 11.25; P, 12.11. |

Example 6

A reaction composition comprising 10.5 g (0.04 mole) tri-(1-cyanoethyl)phosphite, 0.8 g (0.04 mole) water, and 6.8 g (0.01 mole) 1,3,5-tri(pentoxycarbonylmethyl)hexahydro-1,3,5-triazine was agitated at a temperature of about 25°C for 2 hours. An alcohol co-product α-hydroxypropionitrile was removed by employing bulb to bulb distillation at 50°C and 13.33 Pa (0.1 mm Hg). The distillation residue was chromatographed on microcrystalline cellulose employing ethyl acetate/cyclohexane (1/3) as an eluent. A precipitate of the desired product, glycine, N-[[(1-cyanoethoxy)hydroxy-phosphinyl]methyl],pentyl ester, hemihydrate was formed in the effluent upon standing at about 25°C for 12 hours. The yield was 2.0 g (16%). The analysis of said product was:

| | |
|---|---|
| Calculated: | C, 43.85; H, 7.36; N, 9.30; P, 10.28; |
| Found: | C, 43.50; H, 7.12; N, 9.57; P, 10.51. |

Example 7

A reaction composition comprising 11.5 g (0.05 mole) tri-(1-cyanoethyl)phosphite, 0.10 g (0.06 mole) water, and 7.3 g (0.02 mole) 1,3,5-tri(2-chloroethoxycarbonylmethyl)hexahydro-1,3,5-triazine was agitated at a temperature of about 25°C for 16 hours. An alcohol co-product α-hydroxypropionitrile was removed by employing bulb to bulb distillation at 50°C and 2.67 Pa (0.02 mm Hg). The distillation residue was chromatographed on microcrystalline cellulose employing ethyl acetate/cyclohexane (1/3) as an eluent. A solid precipitate of the desired product, glycine, N-[[(1-cyanoethoxy)hydroxyphosphinyl]methyl], 2-chloroethyl ester, was formed in the effluent upon standing at about 25°C for 12 hours. The yield was 1.6 g (11%). The analysis of said product was:

| | |
|---|---|
| Calculated: | C, 33.76; H, 4.96; Cl, 12.46; N, 9.84; P, 10.88; |
| Found: | C, 33.87; H, 4.97; Cl, 12.27; N, 9.97; P, 11.05. |

Example 8

A reaction composition comprising 15.4 g (0.05 mole) tri-(1-cyanopropyl)phosphite, 0.9 g (0.05 mole) water, and 6.3 g (0.02 mole) 1,3,5-tri(ethoxycarbonylmethyl)hexahydro-1,3,5-triazine was agitated at a temperature of about 25°C for 12 hours. An alcohol co-product α-hydroxybutyronitrile was removed by employing bulb to bulb distillation at 25°C and 6.67 Pa (0.05 mm Hg). The distillation residue was chromatographed on microcrystalline cellulose employing ethyl acetate/cyclohexane (1/3) as an eluent. A precipitate of the desired product, glycine, N-[[(1-cyanopropoxy)hydroxyphosphinyl]methyl], ethyl ester, was formed in the effluent upon standing at about 25°C for 72 hours. The yield was 1 g (7%). The analysis of said product was:

| | |
|---|---|
| Calculated: | C, 40.91; H, 6.49; N, 10.60; P, 11.72; |
| Found: | C, 40.84; H, 6.67; N, 10.65; P, 11.71. |

Example 9

A reaction composition comprising 12.5 g (0.05 mole) tri-(1-cyanoethyl)phosphite, 0.9 g (0.05 mole) water, and 8.3 g (0.02 mole) 1,3,5-tri(2-ethoxyethoxycarbonylmethyl)hexahydro-1,3,5-triazine was agitated at a temperature of about 25°C for 14 hours. An alcohol co-product α-hydroxypropionitrile was removed by employing bulb to bulb distillation at 55°C and 13.33 Pa (0.1 mm Hg). The distillation residue was dissolved in ethyl acetate and agitated at about 25°C for 72 hours with formation of the desired product, glycine, N-[[(1-cyanoethoxy)hydroxyphosphinyl]-methyl], 2-ethoxyethyl ester as a precipitate. The yield was 1.9 g (12%). The analysis of said product was:

| | |
|---|---|
| Calculated: | C, 40.82; H, 6.51; N, 9.52; P, 10.53; |
| Found: | C, 40.44; H, 6.62; N, 9.40; P, 10.30. |

Example 10

A reaction composition comprising 11.9 g (0.05 mole) tri-(1-cyanoethyl)phosphite, 0.9 g (0.05 mole) water, and 11.6 g (0.02 mole) 1,3,5-tri(phenylmethoxycarbonylmethyl)hexahydro-1,3,5-triazine was agitated at a temperature of about 25°C for 48 hours. The reaction mixture was agitated with 100 ml ethyl acetate with formation of the desired product, glycine, N-[[(1-cyanoethoxy)hydroxyphosphinyl]methyl]-, phenylmethyl ester as a precipitate. The yield was 3.6 g (24%). The analysis of the product was:

| | |
|---|---|
| Calculated: | C, 50.00; H, 5.49; N, 8.97; P, 9.92; |
| Found: | C, 50.14; H, 5.49; N, 8.92; P, 9.87. |

Example 11

A reaction composition comprising 15.0 g (0.622 mole) tri-(2-cyanoethyl)phosphite, 1.12 g (0.0622 mole) water and 4.22 (0.0207 mole) of 1,3,5-tri(cyanomethyl)hexahydro-1,3,5-triazine was agitated at about 25°C for 12 hours. The resulting product composition was chromatographed on cellulose with ethyl acetate eluent. The product, phosphonic acid, [[(cyanomethyl)amino]methyl], bis 2-(cyanoethyl)ester was isolated as a viscous reddish-brown oil having a yield of 7.2 g (45%) and the following analysis:

| | |
|---|---|
| Calculated: | C, 42.19; H, 5.11; N, 21.87; P, 12.07; |
| Found: | C, 42.89; H, 5.23; N, 21.20; P, 11.21. |

Example 12

A reaction composition comprising of 5 g (0.02 mole) tri-(1-cyanoethyl)phosphite, 0.37 g (0.02 mole) water and 1.4 g (0.0066 mole) of 1,3,5-tri(cyanomethyl)hexahydro-1,3,5-triazine was agitated at about 15°C for 16 hours. A α-hydroxypropionitrile co-product was removed by bulb to bulb distillation at 30°C and 0.05 mm Hg. The distillation residue was chromatographed on cellulose (microcrystalline) with eluent of ethyl acetate:cyclohexane (1:3). The collected column concentrates were placed in vacuo at 60°C and 13.33 Pa (0.1 mm Hg) for 30 minutes with the residue being the desired product. The product, phosphonic acid, [[(cyanomethyl)amino]methyl],bis 1-cyanoethyl ester was obtained as a viscous reddish-colored oil having a yield of 1.4 g (27%) and the following analysis:

| | |
|---|---|
| Calculated: | C, 42.19; H, 5.11; N, 21.87; P, 12.09; |
| Found: | C, 42.14; H, 5.38; N, 20.45; P, 11.40. |

Example 13

A reaction composition comprising 15.0 g (0.0441 mole) tri(ethoxycarbonylmethyl)phosphite, 0.79 g (0.0441 mole) water and 5.08 g (0.0147 mole) 1,3,5-tri-(ethoxycarbonylmethyl) hexahydro-1,3,5-triazine was heated to about 100—110°C for three hours with agitation. An alcohol ethyl glycolate co-product was removed by bulb to bulb distillation of the reaction mixture at 75°C and 13.33 Pa (0.1 mm Hg). The distillation residue was chromatographed on microcrystalline cellulose with an eluent of ethyl acetate. The product, glycine, N-[bis(ethoxycarbonylmethoxy)phosphinylmethyl]-, ethyl ester was obtained as a viscous yellow oil in 62% yield (10.1 g) having the following analysis:

| | |
|---|---|
| Calculated: | C, 42.28; H, 6.55; N, 3.79; P, 8.39; |
| Found: | C, 42.35; H, 6.12; N, 3.90; P, 8.54. |

Example 14

A reaction composition comprising 19.9 g (0.033 mole) tri(1,2-diethoxycarbonylethyl)phosphite, 0.6 g (0.033 mole) water and 3.8 g (0.011 mole) 1,3,5-tri-(ethoxycarbonylmethyl) hexahydro-1,3,5-triazine was heated to about 100—110°C for 2.5 hours with agitation. An alcohol diethyl malate (α-hydroxysuccinate) co-product was removed by bulb to bulb distillation of the reaction mixture at 75°C and 13.33 Pa (0.1 mm Hg). The distillation residue was chromatographed on silica gel with an eluent of ethyl acetate. The product, butanoic acid, 2,2′-[[[(2-ethoxy-2-oxo-ethyl)amino]methyl]phosphinylidene]bis(oxy)bis-, tetraethyl ester was obtained as a viscous yellow oil in 13% yield (2.4 g) having the following analysis:

| | |
|---|---|
| Calculated: | C, 46.58; H, 6.70; N, 2.59; P, 5.72; |
| Found: | C, 46.75; H, 6.60; N, 2.85; P, 6.03. |

Example 15

A reaction composition comprising 15.0 g (0.0353 mole) butanoic acid, 3,3′,3″-phosphinidynetris(oxy)-tris-,triethyl ester, 0.64 g (0.0353 mole) water and 5.08 g (0.0147 mole) 1,3,5-tri-(ethoxycarbonylmethyl) hexahydro-1,3,5-triazine was heated to about 100—110°C for three hours with agitation. An alcohol co-product ethyl β-hydroxybutanoate was removed by bulb to bulb distillation of the reaction mixture at about 80°C and 13.33 Pa (0.1 mm Hg). The distillation residue was chromatographed on microcrystalline cellulose with an eluent of ethyl acetate. The product, butanoic acid, 3,3′-[[[[(2-ethoxy-2-oxoethyl)amino]-methyl]phosphinylidene]bis-(oxy)]bis-, diethyl ester was obtained as a viscous yellow oil in 61.3% yield (9.2 g) having the following analysis:

| | |
|---|---|
| Calculated: | C, 48.00; H, 7.58; N, 3.29; P, 7.28; |
| Found: | C, 47.03; H, 7.48; N, 3.56; P, 8.07. |

Example 16

A reaction composition comprising 15.0 g (0.039 mole) tri-(1-ethoxycarbonylethyl)phosphite, 0.71 g (0.039 mole) water and 4.525 g (0.0131 mole), 1,3,5-tri-(ethoxycarbonylmethyl)hexahydro-1,3,5-triazine was heated to about 100—110°C for three hours with agitation. An alcohol coproduct ethyl α-hydroxypropionate was removed by bulb to bulb distillation of the reaction mixture at 25°C and 13.33 Pa (0.1 mm Hg). The

distillation residue was chromatographed on microcrystalline cellulose with an eluent of ethyl acetate. The product, propanoic acid, 2,2′-[[[[(2-ethoxy-2-oxoethyl)amino]methyl]phosphinylidene]bis(oxy)]-bis-, diethyl ester was obtained as a viscous yellow oil in 84.5% yield (13.1 g) having the following analysis:

| | |
|---|---|
| Calculated: | C, 45.34; H, 7.10; N, 3.53; P, 7.80; |
| Found: | C, 44.68; H, 6.69; N, 4.12; P, 8.56. |

Example 17

A reaction composition comprising 20.0 g (0.0742 mole) tri-(2-chloroethyl)phosphite, 1.34 g (0.0742 mole) water and 8.53 g (0.0247 mole) 1,3,5-tri-(ethoxycarbonylmethyl) hexahydro-1,3,5-triazine was heated to about 100—110°C for three hours with agitation. An alcohol 2-chloroethanol co-product was removed by bulb to bulb distillation of the reaction mixture at 25°C and 13.33 Pa (0.1 mm Hg). The distillation residue was chromatographed on microcrystalline cellulose with an eluent of ethyl acetate. The product, glycine, N-[[bis(2-chloroethoxy)phosphinyl]methyl]-, ethyl ester was obtained as a viscous yellow oil in 96.7% yield (23.1 g) having the following analysis:

| | |
|---|---|
| Calculated: | C, 33.56; H, 5.63; N, 4.35; P, 9.62; |
| Found: | C, 32.94; H, 5.65; N, 4.06; P, 9.51. |

Example 18

A reaction composition comprising 15.0 g (0.0441 mole) tri-(1-methoxycarbonylethyl)phosphite, 0.79 g (0.0441 mole) water and 5.08 g (0.0147 mole) 1,3,5-tri-(ethoxycarbonylmethyl)hexahydro-1,3,5-triazine was heated to about 100—110°C for three hours with agitation. An alcohol coproduct methyl α-hydroxypropionate co-product was removed by bulb to bulb distillation of the reaction mixture at 75°C and 13.33 Pa (0.1 mm Hg). The distillation residue was chromatographed on microcrystalline cellulose with an eluent of ethyl acetate. The product, propanoic acid, 2,2′-[[(ethoxycarbonylmethyl)-amino]methylphosphinylidenedioxy]bis-, dimethyl ester was obtained as a viscous yellow oil in 73.6% yield (9.2 g) having the following analysis:

| | |
|---|---|
| Calculated: | C, 42.28; H, 6.55; N, 3.79; P, 8.39; |
| Found: | C, 41.92; H, 6.23; N, 3.61; P, 7.74. |

Example 19

A reaction composition comprising 15.0 g (0.031 mole) tri-[[(2-ethoxycarbonyl)thio]ethyl]phosphite, 0.56 g (0.031 mole) water, and 3.59 g (0.0104 mole) 1,3,5-tri(ethoxycarbonylmethyl)hexahydro-1,3,5-triazine was heated at about 100 to about 110°C for 3 hours with agitation. An alcohol 2-(ethoxycarbonylthio)-ethanol co-product was removed by bulb to bulb distillation of the reaction mixture at 75°C and 6.67 Pa (0.05 mm Hg). The distillation residue was chromatographed on silica gel with ethyl acetate eluent. The product, glycine, N-[[bis[2-[(ethoxycarbonyl)thio]ethoxy]-phosphinyl]methyl]-, ethyl ester was obtained as a viscous yellow oil in 52% yield (7.4 g) having the following analysis:

| | |
|---|---|
| Calculated: | C, 39.04; H, 6.12; N, 3.04; P, 6.71; |
| Found: | C, 38.16; H, 6.16; N, 2.66; P, 6.20. |

Example 20

A reaction composition comprising 9.6 g (0.025 mole) tri-[tetrahydro-2H-thiopyran-3-yl]phosphite, 0.45 g (0.025 mole) water, and 2.9 g (0.008 mole) 1,3,5-tri(ethoxycarbonylmethyl)hexahydro-1,3,5-triazine was heated at about 100 to about 110°C for 1-1/2 hours with agitation. An alcohol tetrahydro-2H-thiopyran-3-ol co-product was removed by bulb to bulb distillation of the reaction mixture at 120°C and 9.33 Pa (0.07 mm Hg). The distillation residue was chromatographed on microcrystalline cellulose with an eluent of ethylacetate/cyclohexane (2:3). The product, glycine, N-[[bis[(tetrahydro-2H-thiopyran-3-yl)-oxy]-phosphinyl]methyl]-, ethyl ester was obtained as a viscous yellow oil in 40% yield (4.0 g) having the following analysis:

| | |
|---|---|
| Calculated: | C, 45.33; H, 7.10; N, 3.52; P, 7.79; S, 16.13; |
| Found: | C, 45.49; H, 7.28; N, 3.52; P, 7.60; S, 16.31. |

Example 21

A reaction composition comprising 15.0 g (0.045 mole) tri-(2-furanylmethyl)phosphite, 0.81 g (0.045 mole) water, and 5.18 g (0.015 mole) 1,3,5-tri(ethoxycarbonylmethyl)hexahydro-1,3,5-triazine was heated at about 100 to about 110°C for a time of 3 hours. An alcohol 2-furanylmethanol coproduct was removed by employing bulb to bulb distillation of the reaction mixture at 75°C and 6.67 Pa (0.05 mm Hg). The distillation residue was chromatographed on silica gel with an eluent of ethyl acetate. The product, glycine, N-[[bis(2-furanylmethoxy)phosphinyl]methyl]-, ethyl ester was obtained as a viscous yellow oil in 36.6% yield (6.0 g) having the following analysis:

| | |
|---|---|
| Calculated: | C, 49.31; H, 7.72; N, 3.83; P, 8.48; |
| Found: | C, 49.45; H, 8.33; N, 3.38; P, 7.56. |

Example 22

A reaction composition comprising 15.0 g (0.0353 mole) tri-[(2,2-dimethyl-1,3-dioxolan-4-yl)-methyl]-phosphite, 0.64 g (0.0353 mole) water, and 4.07 g (0.0118 mole) 1,3,5-tri(ethoxycarbonylmethyl)hexahydro-1,3,5-triazine was heated at about 100 to about 110°C for a time of 4 hours. An alcohol 2,2-dimethyl-1,3-dioxolan-4-yl methanol coproduct was removed by employing bulb to bulb distillation of the reaction mixture at 80°C and 13.33 Pa (0.1 mm Hg). The distillation residue was chromatographed on silica gel with an eluent of ethyl acetate. The product, glycine, N-[[bis[(2,2-dimethyl-1,3-dioxolan-4-yl)-methoxy]phosphinyl]methyl]-, ethyl ester was obtained as a viscous yellow oil in 35% yield (5.2 g) having the following analysis:

| | |
|---|---|
| Calculated: | C, 48.00; H, 7.58; N, 3.29; P, 7.28; |
| Found: | C, 48.57; H, 7.60; N, 2.74; P, 6.73. |

Example 23

A reaction composition comprising 15.0 g (0.04 mole) tri-[(tetrahydro-2H-pyran-2-yl]methyl)phosphite, 0.72 g (0.04 mole) water, and 4.6 g (0.0133 mole) 1,3,5-tri(ethoxycarbonylmethyl)hexahydro-1,3,5-triazine was heated at about 100 to about 110°C for a time of 3 hours. An alcohol (tetrahydro-2H-pyran-2-yl) methanol byproduct was removed by employing bulb to bulb distillation of the reaction mixture at 75°C and 13.33 Pa (0.1 mm Hg). The distillation residue was chromatographed on silica gel with an eluent of ethyl acetate. The product, glycine, N-[[bis(tetrahydro-2H-pyran-2-ylmethoxy)phosphinyl]methyl]-, ethyl ester was obtained as a viscous yellow oil in 57% yield (9.0 g) having the following analysis:

| | |
|---|---|
| Calculated: | C, 51.90; H, 8.20; N, 3.56; P, 7.87; |
| Found: | C, 51.86; H, 8.34; N, 3.37; P, 7.48. |

Example 24

A reaction composition comprising 15.0 g (0.0402 mole) tri-[2-(1-pyrrolidinyl)ethyl]phosphite, 0.72 g (0.0402 mole) water, and 4.63 g (0.0134 mole) 1,3,5-tri(ethoxycarbonylmethyl)hexahydro-1,3,5-triazine was heated at about 25°C for 1 hour and then at about 100 to about 110°C for 3 hours. The reaction mixture was chromatographed on microcrystalline cellulose with an eluent of ethyl acetate. The product, glycine, N-[[bis-[2-(1-pyrrolidinyl)ethoxy]phosphinyl]methyl]-, ethyl ester was obtained as a viscous yellow oil in 41.3% yield (6.5 g) having the following analysis:

| | |
|---|---|
| Calculated: | C, 52.16; H, 8.75; N, 10.74; P, 7.91; |
| Found: | C, 52.62; H, 8.42; N, 10.85; P, 6.43. |

Example 25

A reaction composition comprising 15.0 g (0.0353 mole) butanoic acid, (3,3',3''-phosphinidyne tris(oxy)tris-), triethyl ester, 0.64 g (0.0353 mole) water, and 4.08 g (0.0118 mole) 1,3,5-tri(ethoxycarbonylmethyl)hexahydro-1,3,5-triazine was heated at about 100 to about 110°C for a time of 3 hours. An alcohol byproduct was removed by employing bulb to bulb distillation of the reaction mixture at about 80°C and 13.33 Pa (0.1 mm Hg). The monoester product was obtained from a solution of ethyl acetate of the distillation residue upon standing at 25°C for 48 hours. The product, butanoic acid, 3-[[[[(2-ethoxy-2-oxoethyl)amino]methyl]hydroxyphosphinyl]oxy]-, ethyl ester was obtained as a white solid in 8% yield (0.9 g) having a melting point of 116—118°C and having the following analysis:

| | |
|---|---|
| Calculated: | C, 42.44; H, 7.12; N, 4.50; P, 9.95; |
| Found: | C, 42.05; H, 7.11; N, 4.31; P, 9.98. |

Example 26

A reaction composition comprising 15.0 g (0.0315 mole) tri-(2,2,2-trichloroethyl)phosphite, 0.57 g (0.0315 mole) water, and 3.63 g (0.0105 mole) 1,3,5-tri(ethoxycarbonylmethyl)hexahydro-1,3,5-triazine was heated at about 100 to about 110°C for a time of 3 hours. The reaction mixture was chromatographed on microcrystalline cellulose with an eluent of ethyl acetate. The product was precipitated from ethyl acetate eluent during 12 hours standing at 25°C. The product, glycine, N-[[(2,2,2-trichloroethoxy)-hydroxyphosphinyl]methyl]- ethyl ester was obtained as a white solid in 14.7% yield (1.6 g) having a melting point of 143—145°C and having the following analysis:

| | |
|---|---|
| Calculated: | C, 24.26; H, 4.36; N, 4.04; P, 8.94; |
| Found: | C, 24.42; H, 3.48; N, 3.66; P, 7.87. |

Example 27

A reaction composition comprising 15.0 g (0.0315 mole) tri-(2,2,2-trichloroethyl)phosphite, 0.57 g (0.0315 mole) water, and 3.63 g (0.0105 mole) 1,3,5-tri(ethoxycarbonylmethyl)hexahydro-1,3,5-triazine was heated at about 100 to about 110°C for a time of 3 hours. The distillation residue was chromatographed on microcrystalline cellulose with an eluent of ethyl acetate. Upon standing for 12 hours at about 25°C a hydrated form of the product precipitated. Upon standing the ethyl acetate filtrate after an additional 12 hours at 25°C deposited the present product which was collected and dried at 40°C and 13.33 Pa (0.1 mm Hg) over $P_2O_5$. The product, glycine, N-[[(hydroxy(2,2,2-trichloroethoxy)phosphinyl]methyl]-, ethyl ester was obtained as a white solid in 10.6% yield (1.1 g) having a melting point of 197—199°C and having the following analysis:

| | |
|---|---|
| Calculated: | C, 25.59; H, 3.99; N, 4.26; P, 9.43; |
| Found: | C, 25.85; H, 3.74; N, 4.44; P, 9.31. |

If desired a diester compound of formula (I) may be hydrolyzed to a monoester compound of formula (I) by controlled hydrolysis. The temperature is in the range from 15 to 50°C and is preferably from 20 to 30°C. Hydrolysis time is in the range from 10 to 60 and preferably from 20 to 40 minutes.

Example 28

A reaction composition comprising 8.0 g (0.028 mole) of ethyl N-[[bis 1-(1-methoxycarbonyl)ethoxy]-phosphinyl]methylglycinate and 0.51 g (0.028 mole) water was agitated at about 25°C for 30 minutes. The reaction mixture was chromatographed on a cation exchange column with water as eluent. The product, propanoic acid, 2-[[[[(2-ethoxy-2-oxoethyl)amino]methyl]hydroxyphosphinyl]oxy]-, methyl ester was isolated as the fourth component determined by a refractive index detector in 41.6% yield (3.30 g) having the following analysis:

| | |
|---|---|
| Calculated: | C, 36.10; H, 6.67; N, 4.68; P, 10.34; |
| Found: | C, 36.18; H, 6.11; N, 4.56; P, 10.38. |

Example 29

A mixture of 20.0 g (0.083 mole) of tri-(2-cyanoethyl)phosphite, 1.45 g (0.081 mole) of water and 9.25 g (0.027 mole) of 1,3,5-tri-(ethoxycarbonylmethyl)hexahydro-1,3,5-triazine was heated at about 110—120°C for four hours with agitation. The alcohol coproduct was removed by bulb to bulb distillation of the reaction mixture at 70—80°C and 6.67 Pa (0.05 mm Hg). The distillation residue was dissolved in 100 ml of ethyl acetate and the desired product precipitated. The solid was collected to afford a 39.4% (8.2 g) yield. The product glycine, N-[(2-cyanoethyl)hydroxyphosphinyl]methyl-, ethyl ester was identified by elemental analysis and nmr.

Example 30

A mixture of 10.0 g (0.06 mole) of triethylphosphite, 1.08 g (0.06 mole) of water and 6.94 g (0.02 mole) of 1,3,5-tri-(ethoxycarbonylmethyl)hexahydro-1,3,5-triazine was heated at 100—110°C for three hours with agitation. The reaction mixture was chromatographed on silica gel with an eluent of ethyl acetate. The compound was obtained as a viscous yellow oil in 80.9% (12.3 g) yield. The product, glycine, ethyl ester, N-(diethoxyphosphinylmethyl) had the following elemental analysis:

| | |
|---|---|
| Calculated: | C, 42.70; H, 7.97; N, 5.53; P, 12.24; |
| Found: | C, 43.90; H, 8.36; N, 5.38; P, 11.77. |

The product had a boiling point of 135—137°C at 26.66 Pa (0.2 mm Hg) pressure and was a colorless oil.

Example 31

The post-emergent herbicidal activity of some of the various compounds of this invention was demonstrated by greenhouse testing in the following manner. A good grade of top soil is placed in aluminum pans having holes in the bottom and compacted to a depth of 0.95 to 1.27 cm from the top of the pan. A predetermined number of seeds of each of several dicotyledonous and monocotyledonous annual plant species and/or vegetative propagules for the perennial plant species were placed on the soil and pressed into the soil surface. The seeds and/or vegetative propagules are covered with soil and leveled. The pans are then placed on a sand bench in the greenhouse and watered from below as needed. After the plants reach the desired age (two to three weeks), each pan except for the control pans is removed individually to a spraying chamber and sprayed by means of an atomizer operating at a positive air pressure of approximately 0.143 MPa (1.46 kg/$cm^2$) absolute. The atomizer contains 6 ml of a solution or suspension of the chemical. In that 6 ml, is an amount of a cyclohexanone emulsifying agent mixture to give a spray solution or suspension which contains about 0.4% by weight of the emulsifier. The spray solution or suspension contains a sufficient amount of the candidate chemical in order to give application rates corresponding to those set forth in the tables. The spray solution is prepared by taking an aliquot of a

1.0% by weight stock solution or suspension of the candidate chemical in an organic solvent such as acetone or tetrahydrofuran or in water. The emulsifying agent employed is a mixture comprising 35 weight percent butylamine dodecylbenzene sulfonate and 65 weight percent of a tall oil ethylene oxide condensate having about 11 moles of ethylene oxide per mole of tall oil. The pans are returned to the greenhouse and watered as before and the injury to the plants as compared to the control is observed at approximately two and four weeks as indicated in the tables under WAT and the results recorded. In some instances, the two-week observations are omitted.

The post-emergent herbicidal activity index used in Tables I and II is as follows:

| Plant response | Index |
|---|---|
| 0—24% control | 0 |
| 25—49% control | 1 |
| 50—74% control | 2 |
| 75—99% control | 3 |
| 100% control | 4 |

The plant species utilized in these tests are identified by letter in accordance with the following legend:

| | |
|---|---|
| A—Canada Thistle* | K—Barnyardgrass |
| B—Cocklebur | L—Soybean |
| C—Velvetleaf | M—Sugar Beet |
| D—Morningglory | N-Wheat |
| E—Lambsquarters | O—Rice |
| F—Smartweed | P—Sorghum |
| G—Yellow Nutsedge* | Q—Wild Buckwheat |
| H—Quackgrass* | R—Hemp Sesbania |
| I—Johnsongrass* | S—Panicum Spp |
| J—Downy Brome | T—Crabgrass |

*—Established from vegetative propagules.

TABLE I

| Compound of example No. | WAT | kg/ha | Plant species A | B | C | D | E | F | G | H | I | J | K |
|---|---|---|---|---|---|---|---|---|---|---|---|---|---|
| 1 | 4 | 11.2 | 3 | 3 | 3 | 3 | 1 | 4 | 3 | 2 | 4 | 2 | 4 |
| | 4 | 5.6 | 4 | 3 | 4 | 3 | 3 | 3 | 2 | 3 | 3 | 3 | 4 |
| 2 | 4 | 56.0 | 4 | 1 | 0 | 1 | 1 | 1 | 0 | 0 | 0 | 0 | 0 |
| | 4 | 11.2 | — | 0 | 0 | 0 | 0 | 0 | 0 | 0 | 0 | 0 | 1 |
| | 2 | 5.6 | — | 0 | 0 | 0 | 0 | 0 | 0 | 0 | 0 | 0 | 0 |
| 3 | 2 | 11.2 | 0 | 0 | 0 | 0 | 0 | 1 | 0 | 0 | 0 | 0 | 2 |
| 4 | 2 | 11.2 | 0 | 0 | 0 | 0 | 1 | 1 | 0 | 0 | 0 | 0 | 1 |
| 5 | 4 | 11.2 | 2 | 3 | 4 | 4 | 4 | 4 | 3 | 4 | 3 | 3 | 4 |
| | 4 | 11.2 | 4 | 4 | 4 | 4 | 4 | 4 | 2 | 4 | 4 | 4 | 4 |
| | 4 | 5.6 | 2 | 4 | 4 | 3 | 2 | 4 | 3 | 3 | 4 | 2 | 4 |
| | 4 | 5.6 | 3 | 3 | 3 | 3 | 4 | 4 | 3 | 4 | 3 | 3 | 4 |
| 6 | 4 | 11.2 | 4 | 3 | 3 | 2 | 4 | 4 | 4 | 3 | 2 | 3 | 3 |
| | 4 | 5.6 | 4 | 3 | 3 | 3 | 2 | 4 | 2 | 2 | 1 | 1 | 3 |
| 7 | 4 | 11.2 | 2 | 3 | 3 | 2 | 3 | 4 | 3 | 0 | 0 | 2 | 2 |
| | 4 | 5.6 | 2 | 4 | 3 | 2 | 4 | 4 | — | 2 | 1 | 2 | 3 |
| 8 | 4 | 11.2 | 4 | 4 | 4 | 3 | 4 | 4 | 4 | 4 | 4 | 4 | 4 |
| | 4 | 5.6 | 4 | 3 | 3 | 2 | 4 | 4 | 3 | 4 | 3 | 3 | 3 |
| 9 | 4 | 11.2 | — | 4 | 4 | 3 | 4 | 3 | 3 | 4 | 4 | 3 | 3 |
| | 4 | 5.6 | — | 3 | 3 | 2 | 4 | 2 | 1 | 4 | 4 | 2 | 3 |
| 10 | 4 | 11.2 | 2 | 2 | 3 | 2 | 3 | 4 | 1 | 2 | 1 | 1 | 3 |
| | 4 | 5.6 | 1 | 2 | 3 | 2 | 3 | — | 1 | 2 | 0 | 2 | 2 |
| 11 | 4 | 11.2 | 2 | 1 | 0 | 2 | 1 | 1 | 1 | 1 | 0 | 0 | 1 |
| | 2 | 5.6 | 0 | 0 | 0 | 0 | 1 | 0 | 0 | 0 | 0 | 0 | 0 |
| 12 | 4 | 11.2 | 2 | 2 | 2 | 2 | 2 | 4 | 3 | 2 | 3 | 1 | 3 |
| | 4 | 5.6 | 2 | 2 | 2 | 2 | 3 | 4 | 3 | 1 | 4 | 2 | 2 |
| 13 | 2 | 11.2 | 0 | 0 | 0 | 1 | 0 | 0 | 0 | 0 | 0 | 0 | 0 |
| | 2 | 5.6 | 0 | 0 | 0 | 0 | — | 0 | 0 | 1 | 0 | 0 | 0 |
| 14 | 2 | 11.2 | 0 | 0 | 0 | 0 | 0 | 0 | 0 | 0 | 0 | 0 | 0 |
| | 2 | 5.6 | 0 | 0 | 0 | 0 | 0 | 0 | 0 | 0 | 0 | 0 | 0 |
| | 4 | 56.0 | 4 | 4 | 4 | 3 | 4 | 4 | 4 | 4 | 3 | 3 | 4 |
| | 2 | 56.0 | 1 | 4 | 3 | 2 | 4 | 3 | 1 | 3 | 3 | 2 | 3 |
| 15 | 4 | 11.2 | 0 | 1 | 0 | 1 | 0 | 0 | 1 | 1 | 0 | 0 | 3 |
| | 2 | 5.6 | 0 | 0 | 0 | 0 | 0 | 0 | 0 | 0 | 0 | 0 | 0 |
| 16 | 4 | 11.2 | 0 | 1 | 0 | 1 | 0 | 0 | 1 | 0 | 0 | 1 | 1 |
| | 2 | 5.6 | 0 | 0 | 0 | 1 | 0 | 0 | 0 | 0 | 0 | 0 | 0 |
| 17 | 4 | 11.2 | 0 | 0 | 1 | 1 | 1 | 1 | 0 | 0 | 0 | 0 | 1 |
| | 2 | 5.6 | 0 | 0 | 0 | 0 | 0 | 0 | 0 | 0 | 0 | 0 | 0 |
| 18 | 4 | 11.2 | 0 | 0 | 0 | 1 | 0 | 0 | 2 | 3 | 1 | 2 | 2 |
| | 4 | 5.6 | 0 | 0 | 0 | 1 | 0 | 0 | 1 | 0 | 0 | 0 | 1 |

TABLE I (Cont'd)

| Compound of example No. | WAT | kg/ha | Plant species A | B | C | D | E | F | G | H | I | J | K |
|---|---|---|---|---|---|---|---|---|---|---|---|---|---|
| 19 | 4 | 11.2 | 2 | 2 | 0 | 2 | 0 | 1 | 1 | 1 | 2 | 0 | 2 |
| | 4 | 5.6 | 1 | 0 | 0 | 2 | 0 | 0 | 0 | 0 | 1 | 0 | 1 |
| 20 | 4 | 11.2 | 0 | 0 | 1 | 1 | 1 | 0 | 0 | 1 | 0 | 0 | 1 |
| | 2 | 5.6 | 0 | 0 | 0 | 0 | 0 | 0 | 0 | 0 | 0 | 0 | 0 |
| 21 | 4 | 56.0 | 3 | 2 | 1 | 2 | 1 | 1 | 1 | 0 | 0 | 1 | 2 |
| | 4 | 11.2 | 0 | 0 | 0 | 1 | 0 | 0 | 0 | 0 | 0 | 0 | 0 |
| 22 | 4 | 56.0 | 2 | 2 | 3 | 2 | 3 | 3 | 2 | 2 | 1 | 2 | 3 |
| | 4 | 11.2 | 0 | 0 | 0 | 1 | 0 | 0 | 0 | 0 | 0 | 0 | 3 |
| 23 | 4 | 11.2 | 0 | 0 | 0 | 1 | 0 | 1 | 0 | 0 | — | 0 | 1 |
| | 2 | 5.6 | 0 | 0 | 0 | 0 | 0 | 0 | 0 | 0 | 0 | 0 | 0 |
| 24 | 4 | 11.2 | 1 | 2 | 1 | 2 | 1 | 2 | 1 | 2 | 2 | 1 | 3 |
| | 4 | 5.6 | 1 | 1 | 1 | 1 | 3 | 2 | 2 | 1 | 1 | 0 | 2 |
| 25 | 4 | 11.2 | 1 | 2 | 1 | 2 | 0 | 0 | 2 | 1 | 2 | 0 | 2 |
| | 4 | 5.6 | 0 | 0 | 0 | 1 | 0 | 0 | 0 | 0 | 1 | 0 | 1 |
| 26 | 4 | 11.2 | 0 | 1 | 0 | 0 | 1 | 0 | 0 | 0 | 0 | 0 | 1 |
| | 4 | 56.0 | 0 | 1 | 0 | 1 | 1 | 1 | 1 | 0 | 0 | 0 | 1 |
| 27 | 4 | 11.2 | 2 | 2 | 2 | 2 | 3 | 2 | 2 | 1 | 0 | 0 | 3 |
| | 4 | 5.6 | 1 | 2 | 1 | 2 | 3 | 2 | 0 | 1 | 2 | 0 | 3 |
| 28 | 4 | 11.2 | 1 | 2 | 2 | 3 | 3 | 3 | 3 | 2 | 3 | 1 | 2 |
| | 4 | 5.6 | 1 | 1 | 0 | 1 | 0 | 0 | 1 | 0 | 2 | 1 | 2 |

— Indicates species of plant absent during test.

TABLE II

| Compound of example No. | WAT | kg/ha | Plant species L | M | N | O | P | B | Q | D | R | E | F | C | J | S | K | T |
|---|---|---|---|---|---|---|---|---|---|---|---|---|---|---|---|---|---|---|
| 1 | 4 | 5.6 | 4 | 4 | 4 | 4 | 4 | 3 | 4 | 3 | 2 | 3 | 4 | 4 | 4 | 4 | 4 | 4 |
| | 4 | 1.12 | 2 | 4 | 2 | 1 | 3 | 2 | 2 | 2 | — | 3 | 3 | 2 | 2 | 4 | 3 | 3 |
| | 4 | 0.28 | 0 | 2 | 1 | 0 | 1 | 1 | 0 | 1 | 0 | 0 | 0 | 0 | 0 | 2 | 2 | 1 |
| 5 | 4 | 5.6 | 4 | 4 | 4 | 4 | 4 | 4 | 4 | 4 | 3 | 4 | 4 | 4 | 3 | 4 | 4 | 4 |
| | 4 | 1.12 | 2 | 2 | 3 | 2 | 3 | 2 | 2 | 2 | 2 | 4 | 4 | 2 | 2 | 4 | 3 | 4 |
| | 4 | 0.28 | 1 | 1 | 1 | 0 | 3 | 2 | 0 | 2 | 1 | 2 | 2 | 1 | 1 | 3 | 3 | 3 |
| 6 | 4 | 5.6 | 4 | 4 | 4 | 4 | 4 | 3 | 4 | 3 | 4 | 4 | 3 | 3 | 4 | 4 | 3 | 4 |
| | 4 | 1.12 | 2 | 4 | 2 | 2 | 3 | 2 | 2 | 2 | 2 | 3 | 3 | 2 | 3 | 4 | 3 | 3 |
| | 4 | 0.28 | 1 | 2 | 2 | 1 | 1 | 2 | 2 | 2 | 1 | 1 | 1 | 1 | 3 | 4 | 2 | 3 |
| 7 | 4 | 5.6 | 3 | 4 | 4 | 3 | 3 | 3 | 2 | 2 | 4 | 2 | 4 | 3 | 3 | 3 | 3 | — |
| | 4 | 1.12 | 2 | 3 | 3 | 3 | 2 | 2 | 2 | 2 | 2 | 2 | 3 | 2 | 2 | 4 | 3 | — |
| | 4 | 0.28 | 1 | 4 | 3 | 1 | 2 | 2 | 2 | 1 | 3 | 4 | 4 | 2 | 2 | 3 | 2 | — |
| 8 | 4 | 5.6 | 4 | 4 | 4 | 4 | 4 | 4 | 4 | 3 | 4 | 4 | 4 | 3 | 3 | 4 | 4 | — |
| | 4 | 1.12 | 3 | 4 | 4 | 3 | 4 | 3 | 3 | 3 | 2 | 3 | 3 | 3 | 3 | 4 | 4 | — |
| | 4 | 0.28 | 1 | 1 | 2 | 0 | 2 | 2 | 1 | 2 | 1 | 1 | 1 | 0 | 2 | 3 | 3 | — |
| | 2** | 0.056 | 0 | 0 | 1 | 0 | 0 | 0 | 0 | 0 | 0 | 0 | 0 | 0 | 0 | 0 | 1 | — |
| 9 | 4 | 5.6 | 4 | 4 | 3 | 3 | 3 | 4 | 3 | 2 | 1 | 4 | 1 | 3 | 4 | 4 | 3 | — |
| | 4 | 1.12 | 3 | 2 | 3 | 2 | 1 | 1 | 0 | 2 | 1 | 4 | 2 | 3 | 1 | 4 | 3 | — |
| | 4 | 0.28 | 1 | 3 | 2 | 1 | 2 | 1 | 1 | 2 | 1 | 4 | 2 | 1 | 2 | 4 | 2 | — |
| 10 | 4 | 5.6 | 3 | 3 | 2 | 2 | 3 | 3 | 3 | 2 | 1 | 3 | 4 | 1 | 2 | 4 | 3 | 4 |
| | 4 | 1.12 | 1 | 2 | 2 | 1 | 2 | 2 | 2 | 2 | 1 | 3 | 4 | 1 | 2 | 4 | 2 | 4 |
| | 4 | 0.28 | 1 | 3 | 1 | 0 | 2 | 1 | 1 | 2 | — | 2 | 4 | 1 | 1 | 3 | 2 | 4 |
| | 2 | 0.056 | 1 | 0 | 0 | 0 | 0 | 0 | 0 | 0 | 0 | 1 | 0 | 0 | 0 | 0 | 0 | 1 |
| | 2 | 0.011 | 0 | 0 | 0 | 0 | 0 | 0 | 0 | 0 | 0 | 0 | 0 | 0 | 0 | 0 | 0 | 0 |
| 12 | 4 | 5.6 | 1 | 1 | 2 | 2 | 4 | 3 | 0 | — | 0 | 4 | 2 | 2 | 3 | 1 | 3 | 2 |
| | 4 | 1.12 | 1 | 0 | 0 | 0 | 3 | 1 | 1 | 1 | 0 | 2 | 0 | 1 | 0 | 0 | 1 | 2 |
| | 2 | 0.28 | 0 | 0 | 0 | 0 | 1 | 0 | 0 | 0 | 0 | 1 | 0 | 0 | 0 | 0 | 0 | 0 |
| 13 | 2 | 5.6 | 1 | 0 | 2 | 0 | 1 | 1 | 0 | 1 | — | — | 1 | 1 | 0 | 0 | 1 | 3 |
| | 2 | 1.12 | 0 | 0 | 0 | 0 | 0 | 0 | 0 | 0 | 1 | 0 | 0 | 0 | 0 | 0 | 0 | 0 |
| | 2 | 0.28 | 0 | 0 | 0 | 0 | 0 | 0 | 0 | 0 | 0 | — | 0 | 0 | 0 | 0 | 0 | 0 |
| 15 | 4 | 5.6 | 1 | 0 | 1 | 0 | 0 | 0 | 0 | 1 | 0 | 1 | 0 | 0 | 0 | 1 | 0 | 2 |
| | 2 | 1.12 | 0 | 0 | 0 | 0 | 0 | 0 | 0 | 0 | 0 | 0 | 0 | 0 | 0 | 0 | 0 | 0 |
| 22 | 4 | 5.6 | 0 | 0 | 1 | 0 | 1 | 0 | 2 | 1 | — | 0 | — | 1 | 0 | 3 | 2 | 2 |
| | 2 | 1.12 | 0 | 0 | 0 | 0 | 0 | — | 0 | 0 | 2 | 1 | — | 0 | 0 | 0 | 1 | 1 |
| 24 | 4 | 5.6 | 2 | 1 | 2 | 2 | 2 | 3 | 1 | 2 | — | 3 | 2 | 2 | 2 | 4 | 3 | 4 |
| | 4 | 1.12 | 0 | 0 | 0 | 0 | 0 | 0 | 0 | 1 | 1 | 1 | 2 | 0 | 0 | 1 | 1 | 2 |
| 27 | 4 | 5.6 | 3 | 3 | 4 | 4 | 3 | 3 | 3 | 2 | 3 | 3 | 3 | 2 | 1 | 4 | 3 | 4 |
| | 4 | 1.12 | 2 | 2 | 2 | 3 | 2 | 2 | 2 | 2 | 2 | 2 | 2 | 1 | 3 | 4 | 3 | 3 |
| | 4 | 0.28 | 2 | 2 | 3 | 3 | 2 | 2 | 2 | 2 | 1 | 1 | 3 | 1 | 3 | 3 | 3 | — |
| | 2 | 0.56 | 0 | 0 | 0 | 0 | 0 | 0 | 0 | 0 | 0 | 0 | 0 | 0 | 0 | 0 | 0 | — |
| | 2 | 0.02 | 0 | 0 | 0 | 0 | 0 | 0 | 0 | 0 | 0 | 0 | 0 | 0 | 0 | 0 | 0 | — |
| 28 | 4 | 5.6 | 1 | 0 | 1 | 2 | 2 | 2 | 0 | 2 | 3 | 1 | 1 | 0 | 0 | 2 | 3 | 3 |
| | 2 | 1.12 | 1 | 0 | 0 | 0 | 0 | 0 | 0 | 1 | 0 | 0 | 0 | 0 | 0 | 0 | 1 | 2 |
| | 2 | 0.28 | 0 | 0 | 0 | 0 | 0 | 0 | 0 | 0 | 0 | 0 | 0 | 0 | 0 | 0 | 1 | 1 |

— Species of plant absent during test.
** Formulated immediately prior to treatment.

From the test results presented in Tables I and II, it can be seen that the post-emergent herbicidal activity of the compounds of this invention is, for the most part, general in nature. In certain specific instances, however, some selectivity is demonstrated. In this regard it should be recognized that each individual species selected for the above tests is a representative member of a recognized family of plant species.

The herbicidal compositions, including concentrates which require dilution prior to application to the plants, of this invention contain from 5 to 95 parts by weight of at least one compound of this invention and from 5 to 95 parts by weight of an adjuvant in liquid or solid form, for example, from 0.25 to 25 parts by weight of wetting agent, from 0.25 to 25 parts by weight of a dispersant and from 4.5 to 94.5 parts by weight of inert liquid extender, e.g., water, acetone, tetrahydrofuran, all parts being by weight of the total composition. Preferably, the compositions of this invention contain from 5 to 75 parts by weight of at least one compound of this invention, together with the adjuvants. Where required, from 0.1 to 2.0 parts by weight of the inert liquid extender can be replaced by a corrosion inhibitor such as ethanol mercaptan, sodium thiosulfate, dodecylmono or dimercaptan or anti-foaming agent such as a dimethylpolysiloxane, or both. The compositions are prepared by admixing the active ingredient with an adjuvant including diluents, extenders, carriers and conditioning agents to provide compositions in the form of finely-divided particulate solids, pellets, solutions, dispersions or emulsions. Thus, the active ingredient can be used with an adjuvant such as a finely-divided solid, a liquid of organic origin, water, a wetting agent, a dispersing agent, an emulsifying agent or any suitable combination of these.

The herbicidal compositions of this invention, particularly liquids and soluble powders, preferably contain as a conditioning agent one or more surface-active agents in amounts sufficient to render a given composition readily dispersible in water or in oil. The incorporation of a surface-active agent into the compositions greatly enhances their efficacy. By the term "surface-active agent", it is understood that wetting agents, dispersing agents, suspending agents and emulsifying agents are included therein. Anionic, cationic and nonionic agents can be used with equal facility.

Preferred wetting agents are alkyl benzene and alkyl naphthalene sulfonates, sulfated fatty alcohols, amines or acid amides, long chain acid esters of sodium isothionate, esters of sodium sulfosuccinate, sulfated or sulfonated fatty acid esters petroleum sulfonates, sulfonated vegetable oils, polyoxyethylene derivatives of phenols and alkylphenols (particularly isooctylphenol and nonylphenol) and polyoxyethylene derivatives of the mono-higher fatty acid esters of hexitol anhydrides (e.g., sorbitan). Preferred dispersants are methyl cellulose, polyvinyl alcohol, sodium lignin, sulfonates, polymeric alkyl naphthalene sulfonates, sodium naphthalene sulfonate, polymethylene bisnaphthalenesulfonate and sodium N-methyl-N-(long chain acid) taurates.

When operating in accordance with the present invention, effective amounts of the compounds or compositions of this invention are applied to the plants, or to soil containing the plants, or are incorporated into aquatic media in any convenient fashion. The application of liquid and particulate solid compositions to plants or soil can be carried out by conventional methods, e.g., power dusters, boom and hand sprayers and spray dusters. The compositions can also be applied from airplanes as a dust or a spray because of their effectiveness at low dosages. The application of herbicidal compositions to aquatic plants is usually carried out by adding the compositions to the aquatic media in the area where control of the aquatic plants is desired.

The application of an effective amount of the compounds or compositions of this invention to the plant is essential and critical for the practice of the present invention. The exact amount of active ingredient to be employed is dependent upon the response desired in the plant as well as such other factors as the plant species and stage of development thereof, and the amount of rainfall as well as the specific glycine employed. In foliar treatment for the control of vegetative growth, the active ingredients are applied in amounts from 0.112 to 56.0 or more kilograms per hectare. In pre-emergent treatments, the rate of application can be from 0.56 to 22.4 or more kilograms per hectare. In applications for the control of aquatic plants, the active ingredients are applied in amounts of from 0.01 parts per million to 1000 parts per million, based on the aquatic medium. An effective amount for phytotoxic or herbicidal control is that amount necessary for overall or selective control, i.e., a phytotoxic or herbicidal amount. It is believed that one skilled in the art can readily determine from the teachings of this specification, including examples, the approximate application rate.

There are several methods for applying liquid compositions of this invention to emerged plants. Such methods include the use of wiper systems whereby the plant to be treated is contacted with an absorbent material containing the particular liquid composition, a portion of which is thereby released onto the plant upon contact therewith. Such wiper systems typically comprise a reservoir of the liquid composition into which a portion of the absorbent material is placed and is fed therethrough. Generally, substances employable as absorbent material include substances of any shape or form capable of absorbing the liquid composition and releasing a portion of the same upon contact with the plant. Typical absorbent materials include felt, foam rubber, cellulose, nylon, sponges, hemp, cotton, burlap, polyester over acrylic and combinations thereof. Forms of absorbent material include rope, twine, string, cloths, carpets and combinations thereof. These forms may be assembled in any manner desired including a pipe rope wick, a wedge rope wick and a multi-rope wick.

In another application method, liquid compositions may be selectively applied to weeds by the use of

recirculating spray systems wherein the recirculating spray unit is mounted on a tractor or high clearance mobile equipment and the spray is directed horizontally onto the weeds growing over a crop. Spray not intercepted by the weeds is collected in a recovery chamber before contacting the crop and is reused. Roller applications may also be employed to apply liquid compositions to weeds growing over a crop.

In yet another application method, shielded applicators may be employed to direct the liquid composition in the form of a sprayer onto the weeds while effectively shielding the crops from the spray.

These and other application methods for selectively applying liquid compositions to weeds are discussed in detail in Innovative Methods of Post-Emergence Weed Control, McWhorter C. G., Southern Weed Science Society, 33rd Annual Meeting Proceedings, Jan. 15—17, 198; Auburn University Printing Service, Auburn, Alabama U.S.A., the teachings of which are incorporated herein by reference in their entirety.

Another method of applying liquid compositions of this invention to plants includes controlled droplet application which is also known as the ultra low-volume chemical application. Controlled droplet application involves the production of uniform or nearly uniform spray drops of a predetermined size and the conveyance of these drops with negligible evaporation to a spray target. In particular, this method comprises feeding spray solutions to a rotary atomizer comprising a small disk with serrated edges that disperses liquid into droplets as the disk spins. Different droplet sizes are produced by changing solution flow rates to the spinning disk or changing the speed of rotation of the disk.

The aforementioned and other methods for applying liquid compositions to plants are discussed in detail in "Rope Wick Applicator—Tool With A Future", Dale, James E., pp. 3—4, "The Recirculating Sprayer and Roundup® Herbicide", Derting, Claude W., pp. 5—7, and "C.D.A. Herbicide Application", McGarvey, Frank X., *Weeds Today*, Volume 11, Number 2, pp. 8—9, Late Spring, 1980, 309 W. Clark St., Champaign, Illinois, the teachings of which are incorporated herein by reference in their entirety.

## Claims

1. A process for the preparation of phosphonate compounds useful as herbicides of the formula

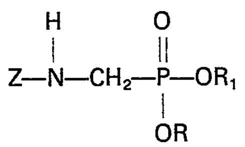

(I)

wherein Z is

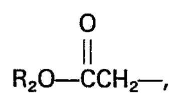

wherein $R_2$ is $C_{1-8}$alkyl, ($C_{1-8}$alkoxy) $C_{1-8}$alkyl, halo $C_{1-8}$alkyl, phenyl $C_{1-8}$alkyl, or Z is $C_{2-8}$alkynyl, $C_{1-8}$alkyl, or $N{\equiv}CCH_2$—;

$R_1$ is selected from

(a)

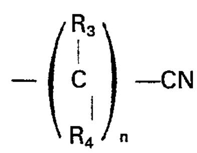

wherein n is an integer from 1 to 4, $R_3$ is selected from hydrogen, $C_{1-8}$alkyl, ($C_{1-8}$alkoxy) $C_{1-8}$alkyl, halo $C_{1-8}$alkyl, phenyl $C_{1-8}$alkyl, and $R_4$ is hydrogen or $C_{1-8}$ alkyl, excepting that $R_3$ and $R_4$ cannot both be hydrogen when n is 1;

(b)

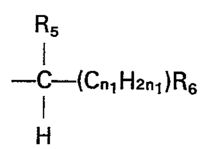

where $R_5$ is hydrogen, $C_{1-8}$alkyl, ($C_{1-8}$alkoxy)carbonyl, and $R_6$ is halogen, ($C_{1-8}$alkoxy)carbonyl or

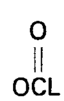

wherein L is $C_{1-8}$alkyl, and $n_1$ is 0 or an integer from 1 to 3;

(c) $-(C_{n_2}H_{2n_2})S-X$, wherein X is $C_{1-8}$alkyl or ($C_{1-8}$alkoxy) carbonyl and $n_2$ is an integer from 1 to 4; or

(d) $-(C_{n_3}H_{2n_3})-Y$, wherein $n_3$ is 0 or an integer from 1 to 4 and Y is selected from trihalomethyl, ($C_{1-8}$alkoxy)carbonyl, furanyl, pyrolidinyl, pyranyl, thiopyranyl,

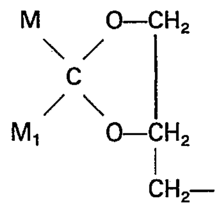

wherein $M_1$ and M are independently $C_{1-8}$alkyl; and R is $R_1$ or hydrogen; said process comprising reacting a trisubstituted phosphite of the formula $P(OR_1)_3$ wherein $R_1$ is as defined above, with water and a compound of the formula

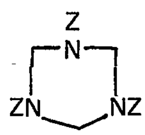

wherein Z is as aforedefined, to prepare a crude phosphonate composition containing said phosphonate compound, and thereafter recovering said phosphonate compound from said crude phosphonate composition.

2. A process of Claim 1, wherein said process is conducted in the absence of a solvent.

3. A process of either of Claims 1 and 2 wherein said process is conducted in the absence of a catalyst.

4. A process of any of Claims 1 to 3 wherein the reaction is carried out at a temperature in the range from 10 to 110°C.

5. A process of Claim 4 wherein the temperature is in the range from 20 to 100°C.

6. A process of any of Claims 1 to 5 wherein Z is

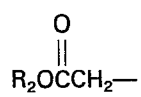

wherein $R_2$ is ($C_{1-8}$alkoxy) $C_{1-8}$alkyl, halo $C_{1-8}$alkyl or phenyl $C_{1-8}$alkyl, or Z is $N{\equiv}CCH_2$;

R is hydrogen; and

$R_1$ is

(a)

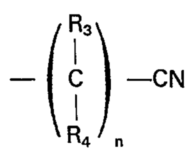

wherein n is an integer from 1 to 4, $R_3$ is selected from $C_{1-8}$alkyl, ($C_{1-8}$alkoxy) $C_{1-8}$alkyl, and $R_4$ is hydrogen or $C_{1-8}$alkyl; or

(b) $-(C_{n_3}H_{2n_3})-Y$ wherein $n_3$ is 0 or an integer from 1 to 4 and Y is trihalomethyl.

7. A process of any of Claims 1 to 5 wherein said compound is glycine, N-[[(1-cyanoethoxy)hydroxyphosphinyl]methyl], pentyl ester;

glycine, N-[[(1-cyanoethoxy)hydroxyphosphinyl]methyl], 2-chloro-ethyl ester;

glycine, N-[[(1-cyanopropoxy)hydroxyphosphinyl]methyl], ethyl ester;

glycine, N-[[(1-cyanoethoxy)hydroxyphosphinyl]methyl], 2-ethoxyethyl ester;

glycine, N-[[(1-cyanoethoxy)hydroxyphosphinyl]methyl], phenylmethyl ester;

glycine, N-[[hydroxy(2,2,2-trichloroethoxy)phosphinyl]methyl], ethyl ester;

glycine, N-[[(cyanomethoxy)hydroxyphosphinyl]methyl], ethyl ester;

or glycine, N-[[bis(1-cyanopropoxy)phosphinyl]methyl], ethyl ester.

8. A compound of the formula

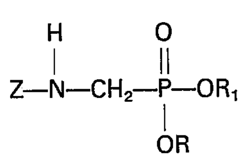

or any agriculturally acceptable salt thereof, wherein Z is $C_{2-8}$alkynyl, $C_{1-8}$alkyl, or $N{\equiv}CCH_2-$;

$R_1$ is selected from

(a)

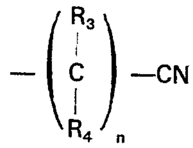

wherein n is an integer from 1 to 4, $R_3$ is selected from hydrogen, $C_{1-8}$alkyl, ($C_{1-8}$alkoxy) $C_{1-8}$alkyl, halo $C_{1-8}$alkyl, phenyl $C_{1-8}$alkyl, and $R_4$ is hydrogen or $C_{1-8}$alkyl, but excluding the compounds wherein n is 2 and $R_3$ and $R_4$ are both hydrogen;

(b)

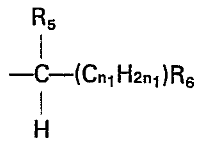

where $R_5$ is hydrogen, $C_{1-8}$alkyl, ($C_{1-8}$alkoxy)carbonyl, and $R_6$ is halogen, ($C_{1-8}$alkoxy)carbonyl or

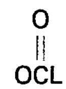

wherein L is $C_{1-8}$alkyl, and $n_1$ is 0 or an integer from 1 to 3;

(c) $—(C_{n_2}H_{2n_2})S—X$, wherein X is $C_{1-8}$alkyl or ($C_{1-8}$alkoxy) carbonyl and $n_2$ is an integer from 1 to 4; or

(d) $—(C_{n_3}H_{2n_3})—Y$, wherein $n_3$ is 0 or an integer from 1 to 4 and Y is selected from trihalomethyl, ($C_{1-8}$alkoxy)carbonyl, furanyl, pyrolidinyl, pyranyl, thiopyranyl,

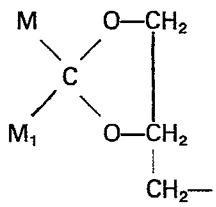

wherein $M_1$ and M are independently $C_{1-8}$alkyl; and R is $R_1$ or hydrogen.

9. A herbicidal method which comprises applying to the plants a herbicidally effective amount of a compound of Claim 8.

10. A herbicidal composition comprising a herbicidally effective amount of a compound of Claim 8.

**Patentansprüche**

1. Verfahren zur Herstellung von herbizid wirkenden Phosphonatverbindungen der allgemeinen Formel I

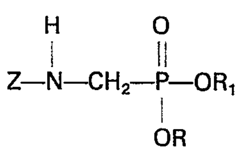

(I)

worin Z für

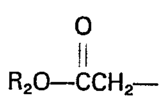 steht,

worin $R_2$ $C_{1-8}$-Alkyl, ($C_{1-8}$-Alkoxy)-$C_{1-8}$-alkyl, Halogen-$C_{1-8}$-alkyl oder Phenyl-$C_{1-8}$-alkyl bedeutet, oder Z für $C_{2-8}$-Alkinyl, $C_{1-8}$-Alkyl oder $N{\equiv}C—CH_2—$ steht,

$R_1$ ausgewählt ist unter

(a)

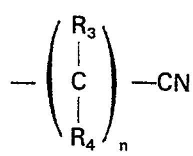

worin n eine ganze Zahl von 1 bis 4 ist, $R_3$ ausgewählt ist unter Wasserstoff, $C_{1-8}$-Alkyl, ($C_{1-8}$-Alkoxy)-$C_{1-8}$-alkyl, Halogen-$C_{1-8}$-alkyl und Phenyl-$C_{1-8}$-alkyl, und $R_4$ ein Wasserstoffatom oder einen $C_{1-8}$-Alkylrest darstellt, mit der Ausnahme, daß $R_3$ und $R_4$ nicht beide ein Wasserstoffatom bedeuten, wenn n gleich 1 ist,

(b)

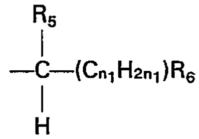

worin $R_5$ ein Wasserstoffatom, einen $C_{1-8}$-Alkyl- oder ($C_{1-8}$-Alkoxy)carbonylrest darstellt, und $R_6$ ein Halogenatom, ($C_{1-8}$-Alkoxy)carbonyl oder

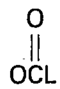

bedeutet, worin L für $C_{1-8}$-Alkyl steht und $n_1$ gleich 0 oder eine ganze Zahl von 1 bis 3 ist,

(c) $—(C_{n_2}H_{2n_2})S—X$

worin X für $C_{1-8}$-Alkyl oder ($C_{1-8}$-Alkoxy)carbonyl steht und $n_2$ eine ganze Zahl von 1 bis 4 bedeutet, und

(d) $—(C_{n_3}H_{2n_3})—Y$

worin $n_3$ für 0 oder eine ganze Zahl von 1 bis 4 steht, und Y ausgewählt ist unter Trihalogenmethyl, ($C_{1-8}$-Alkoxy)carbonyl, Furanyl, Pyrolidinyl, Pyranyl, Thiopyranyl und

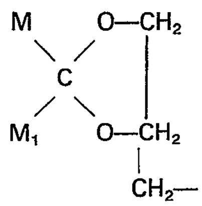

worin $M_1$ und M unabhängig $C_{1-8}$-Alkyl darstellen, und R gleich $R_1$ oder ein Wasserstoffatom ist, wobei in dem Verfahren ein trisubstituiertes Phosphit der Formel $P(OR_1)_3$, worin $R_1$ die oben angegebene Bedeutung hat, mit Wasser und einer Verbindung der Formel

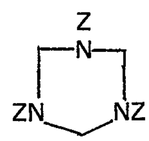

worin Z die zuvor angegebene Bedeutung hat, umgesetzt wird, um eine rohe Phosphonat-Zusammensetzung herzustellen, welche die Phosphonat-Verbindung enthält, und danach die Phosphonat-Verbindung aus der rohen Phosphonat-Zusammensetzung gewonnen wird.

2. Verfahren nach Anspruch 1, worin das Verfahren unter Abwesenheit eines Lösungsmittels durchgeführt wird.

3. Verfahren nach einem der Ansprüche 1 und 2, worin das Verfahren in Abwesenheit eines Katalysators durchgeführt wird.

4. Verfahren nach einem der Ansprüche 1 bis 3, worin die Reaktion bei einer Temperatur im Bereich von 10 bis 110°C durchgeführt wird.

5. Verfahren nach Anspruch 4, worin die Temperatur im Bereich von 20 bis 100°C liegt.

6. Verfahren nach einem der Ansprüche 1 bis 5, worin Z für

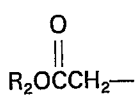

steht, worin $R_2$ gleich ($C_{1-8}$-Alkoxy)-$C_{1-8}$-alkyl, Halogen-$C_{1-8}$-alkyl oder Phenyl-$C_{1-8}$-alkyl ist, oder Z für $N{\equiv}CCH_2$ steht, R ein Wasserstoffatom bedeutet, und $R_1$ den Rest

(a)

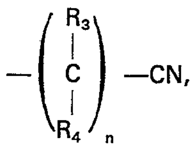

worin n eine ganze Zahl von 1 bis 4 ist, $R_3$ ausgewählt ist unter $C_{1-8}$-Alkyl, ($C_{1-8}$-Alkoxy)-$C_{1-8}$-alkyl, und $R_4$ ein Wasserstoffatom oder einen Rest $C_{1-8}$-Alkyl darstellt, oder

(b) $—(C_{n_3}H_{2n_3})—Y$,

worin $n_3$ für 0 oder eine ganze Zahl von 1 bis 4 steht, und Y ein Trihalogenmethylrest ist, bedeutet.

7. Verfahren nach einem der Ansprüche 1 bis 5, worin die Verbindung Glycin-N-[[(1-cyanoethoxy)hydroxyphosphinyl]methyl]-pentylester,
Glycin-N-[[(1-cyanoethoxy)hydroxyphosphinyl]methyl]-2-chloroethylester,
Glycin-N-[[(1-cyanopropoxy)hydroxyphosphinyl]methyl]-ethylester,
Glycin-N-[[(1-cyanoethoxy)hydroxyphosphinyl]methyl]-2-ethoxyethylester,
Glycin-N-[[(1-cyanoethoxy)hydroxyphosphinyl]methyl]-phenylmethylester,
Glycin-N-[[hydroxy-(2,2,2-trichlorethoxy)phosphinyl]methyl]-ethylester,
Glycin-N-[[(cyanomethoxy)hydroxyphosphinyl]methyl]-ethylester oder
Glycin-N-[[bi-(1-cyanopropoxy)phosphinyl]methyl]-ethylester ist.

8. Verbindung der allgemeinen Formel

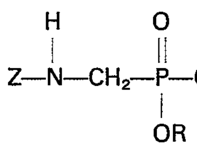

oder ein in der Landwirtschaft unbedenkliches Salz davon, worin Z für $C_{2-8}$-Alkinyl, $C_{1-8}$-Alkyl oder $N{\equiv}CCH_2—$ steht, $R_1$ ausgewählt ist unter

(a)

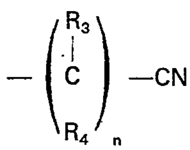

worin n eine ganze Zahl von 1 bis 4 ist, $R_3$ ausgewählt ist unter Wasserstoff, $C_{1-8}$-Alkyl, ($C_{1-8}$-Alkoxy)-$C_{1-8}$-alkyl, Halogen-$C_{1-8}$-alkyl und Phenyl-$C_{1-8}$-alkyl, und $R_4$ ein Wasserstoffatom oder einen $C_{1-8}$-Alkylrest darstellt, mit Ausnahme derjenigen Verbindungen, worin n gleich 2 ist und $R_3$ und $R_4$ jeweils ein Wasserstoffatom bedeutet,

(b)

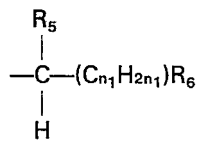

worin $R_5$ ein Wasserstoffatom, einen $C_{1-8}$-Alkyl- oder ($C_{1-8}$-Alkoxy)-carbonylrest darstellt, und $R_6$ ein Halogenatom, ($C_{1-8}$-Alkoxy)-carbonyl oder

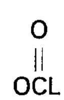

bedeutet, worin L für $C_{1-8}$-Alkyl steht und $n_1$ gleich 0 oder eine ganze Zahl von 1 bis 3 ist,

(c) $—(C_{n_2}H_{2n_2})S—X$,

worin X für $C_{1-8}$-Alkyl oder ($C_{1-8}$-Alkoxy)carbonyl steht und $n_2$ eine ganze Zahl von 1 bis 4 bedeutet, und

(d) $—(C_{n_3}H_{2n_3})—Y$,

worin $n_3$ für 0 oder eine ganze Zahl von 1 bis 4 steht, und Y ausgewählt ist unter Trihalogenmethyl, ($C_{1-8}$-Alkoxy)carbonyl, Furanyl, Pyrolidinyl, Pyranyl, Thiopyranyl, und

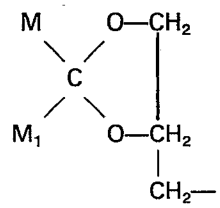

worin $M_1$ und M unabhängig $C_{1-8}$-Alkyl darstellen, und R gleich $R_1$ oder ein Wasserstoffatom ist.

9. Herbizid-Verfahren, wobei auf die Pflanzen eine herbizid wirksame Menge einer Verbindung nach Anspruch 8 aufgebracht wird.

10. Herbizid-Zusammensetzung, die eine herbizid wirksame Menge einer Verbindung nach Anspruch 8 enthält.

**Revendications**

1. Procédé de préparation de phosphonates utiles comme herbicides répondant à la formule:

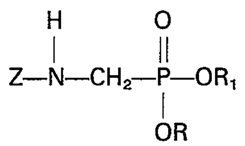

(I)

dans laquelle Z est

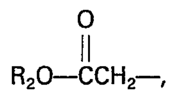

où $R_2$ est un alkyle en $C_1$ à $C_8$, un (alcoxy en $C_1$ à $C_8$)alkyle en $C_1$ à $C_8$, un haloalkyle en $C_1$ à $C_8$, un phényl (alkyle en $C_1$ à $C_8$), ou Z est un alcynyle en $C_2$ à $C_8$, un alkyle en $C_1$ à $C_8$ ou $N{\equiv}CCH_2$—;

$R_1$ est choisi parmi

(a)

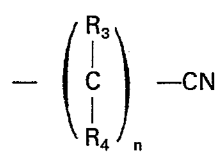

où n est un entier de 1 à 4, $R_3$ est choisi parmi l'hydrogène, un alkyle en $C_1$ à $C_8$, un (alcoxy en $C_1$ à $C_8$) alkyle en $C_1$ à $C_8$, un halo(alkyle en $C_1$ à $C_8$), un phényl(alkyle en $C_1$ à $C_8$), et $R_4$ est l'hydrogène ou un alkyle en $C_1$ à $C_8$, excepté que $R_3$ et $R_4$ ne peuvent pas être tous deux l'hydrogène lorsque n est 1;

(b)

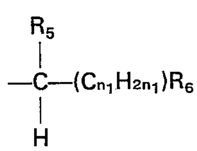

où $R_5$ est l'hydrogène, un alkyle en $C_1$ à $C_8$, un (alcoxy en $C_1$ à $C_8$)carbonyle et $R_6$ est un halogène, un (alcoxy en $C_1$ à $C_8$)carbonyle ou

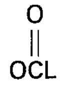

où L est un alkyle en $C_1$ à $C_8$, et $n_1$ est 0 ou un entier de 1 à 3;

(c) —$(C_{n_2}H_{2n_2})$S—X, où X est un alkyle en $C_1$ à $C_8$ ou un (alcoxy en $C_1$ à $C_8$)carbonyle et $n_2$ est un entier de 1 à 4; ou

(d) —$(C_{n_3}H_{2n_3})$—Y, où $n_3$ est 0 ou un entier de 1 à 4 et Y est choisi parmi un trihalométhyle, un (alcoxy en $C_1$ à $C_8$)carbonyle, un furanyle, un pyrolidinyle, un pyranyle, un thiopyranyle,

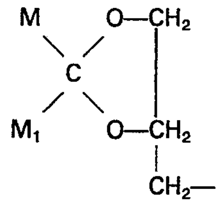

où $M_1$ et M sont indépendamment un alkyle en $C_1$ à $C_8$; et R est $R_1$ ou l'hydrogène; ce procédé consistant à faire réagir un phosphite trisubstitué de formule $P(OR_1)_3$, dans laquelle $R_1$ est tel que défini ci-dessus, avec l'eau et un composé répondant à la formule:

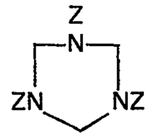

dans laquelle Z est tel que défini précédemment, pour préparer une composition de phosphonate brute contenant ce phosphonate, puis à récupérer ce phosphonate dans cette composition de phosphonate brute.

2. Procédé selon la revendication 1, dans lequel ce procédé est effectué en l'absence d'un solvant.

3. Procédé selon l'une quelconque des revendications 1 ou 2, dans lequel ce procédé est effectué en l'absence d'un catalyseur.

4. Procédé selon l'une quelconque des revendications 1 à 3, dans lequel la réaction est effectuée à une température dans l'intervalle de 10 à 110°C.

5. Procédé selon la revendication 4, dans lequel la température est dans l'intervalle de 20 à 100°C.

6. Procédé selon l'une quelconque des revendications 1 à 5, dans lequel Z est

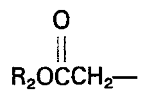

où $R_2$ est un (alcoxy en $C_1$ à $C_8$) alkyle en $C_1$ à $C_8$, un halo(alkyle en $C_1$ à $C_8$), ou un phényl(alkyle en $C_1$ à $C_8$), ou Z est $N{\equiv}CCH_2$

R est l'hydrogène; et

$R_1$ est

(a)

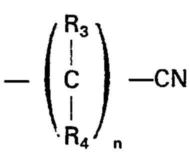

où n est un entier de 1 à 4, $R_3$ est choisi parmi un alkyle en $C_1$ à $C_8$, un (alcoxy en $C_1$ à $C_8$)alkyle en $C_1$ à $C_8$ et $R_4$ est l'hydrogène ou un alkyle en $C_1$ à $C_8$; ou

(b) $-(C_{n_3}H_{2n_3})-Y$, où $n_3$ est 0 ou un entier de 1 à 5 et Y est un trihalométhyle.

7. Procédé selon l'une quelconque des revendications 1 à 5, dans lequel ce composé est la N-[[(1-cyanoéthoxy)hydroxyphosphinyl]méthyl]glycine, ester pentylique;

la N-[[(1-cyanoéthoxy)hydroxyphosphinyl]méthyl]glycine, ester 2-chloro éthylique;

la N-[[(1-cyanopropoxy)hydroxyphosphinyl]méthyl]glycine, ester éthylique;

la N-[[(1-cyanéthoxy)hydroxyphosphinyl]méthyl]glycine, ester 2-éthoxyéthylique;

la N-[[(1-cyanéthoxy)hydroxyphosphinyl]méthyl]glycine ester phénylméthylique;

la N-[[hydroxy(2,2,2-trichloréthoxy)phosphinyl]méthyl]glycine, ester éthylique;

la N-[[(cyanométhoxy)hydroxyphosphinyl]méthyl]glycine, ester éthylique;

ou la N-[[bis(1-cyanopropoxy)phosphinyl]méthyl]glycine, ester éthylique.

8. Composé répondant à la formule:

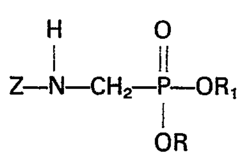

ou l'un quelconque de ses sels acceptables en agriculture, dans laquelle Z est un alcynyle en $C_2$ à $C_8$, un alkyle en $C_1$ à $C_8$ ou $N{\equiv}CCH_2$—;

R₁ est choisi parmi

(a)

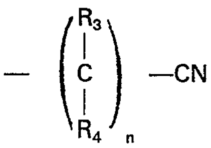

où n est un entier de 1 à 4, $R_3$ est choisi parmi l'hydrogène, un alkyle en $C_1$ à $C_8$, un (alcoxy en $C_1$ à $C_8$)alkyle en $C_1$ à $C_8$, un halo(alkyle en $C_1$ à $C_8$), un phényl(alkyle en $C_1$ à $C_8$), et $R_4$ est l'hydrogène ou un alkyle en $C_1$ à $C_8$ mais en excluant les composés où n est 2 et $R_3$ et $R_4$ sont tous deux l'hydrogène;

(b)

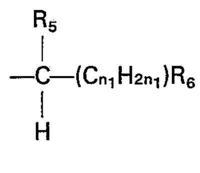

où $R_5$ est l'hydrogène, un alkyle en $C_1$ à $C_8$, un (alcoxy en $C_1$ à $C_8$)carbonyle et $R_6$ est un halogène, un (alcoxy en $C_1$ à $C_8$)carbonyle ou

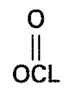

où L est un alkyle en $C_1$ à $C_8$ et $n_1$ est 0 ou un entier de 1 à 3;

(c) —$(C_{n_2}H_{2n_2})$S—X, où X est un alkyle en $C_1$ à $C_8$ ou un (alcoxy en $C_1$ à $C_8$)carbonyle et $n_2$ est un entier de 1 à 4; ou

(d) —$(C_{n_3}H_{2n_3})$—Y, où $n_3$ est 0 ou un entier de 1 à 4, et Y est choisi parmi un trihalométhyle, un (alcoxy en $C_1$ à $C_8$)carbonyle, un furanyle, un pyrolidinyle, un pyranyle, un thiopyranyle,

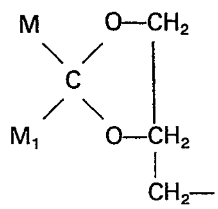

où $M_1$ et M sont indépendamment un alkyle en $C_1$ à $C_8$; et R est $R_1$ ou l'hydrogène.

9. Procédé herbicide qui consiste à appliquer aux plantes une quantité efficace du point de vue herbicide d'un composé de la revendication 8.

10. Composition herbicide comprenant une quantité efficace comme herbicide d'un composé de la revendication 8.